# EUROPÄISCHE PATENTSCHRIFT

(11) **EP 3 694 739 B1**
(45) Veröffentlichungstag und Bekanntmachung des Hinweises auf die Patenterteilung: **16.11.2022**
(21) Anmeldenummer: 18786230.5
(22) Anmeldetag: 26.09.2018
(51) Int. Cl.: B60K 35/00, B60K 37/06, B60R 1/00

(54) **VERFAHREN UND VORRICHTUNG ZUM KONFIGURIEREN VON FAHRZEUGFUNKTIONEN**
METHOD AND DEVICE FOR CONFIGURING VEHICLE FUNCTIONS
PROCÉDÉ ET DISPOSITIF POUR CONFIGURER DES FONCTIONS DE VÉHICULE

(30) Priorität: 11.10.2017 DE 102017218100
(43) Veröffentlichungstag der Anmeldung: 19.08.2020
(73) Patentinhaber: Bayerische Motoren Werke Aktiengesellschaft, 80809 München (DE)
(72) Erfinder: SCHWARZ, Felix, 80333 München (DE); WESTPHAL, Björn, 81929 München (DE); KIENER, Maximilian, 4691 Schlatt (AT)
(86) Internationale Anmeldenummer: PCT/EP2018/076183
(87) Internationale Veröffentlichungsnummer: WO 2019/072573

(56) Entgegenhaltungen:
- DE-A1-102014 224 583
- DE-A1-102017 000 557
- JP-A- 2015 041 344
- US-A1- 2014 219 508
- US-A1- 2017 200 203

## Beschreibung

Die Erfindung betrifft ein Verfahren und eine Vorrichtung zum Konfigurieren von Fahrzeugfunktionen.

Aktuell werden Fahrzeugfunktionen oftmals über Bedienelemente aufgerufen, welche im Umfeld eines Fahrers eines Fahrzeuges angeordnet sind. Eine beispielhafte Fahrzeugfunktion ist eine Freisprecheinrichtung. Um diese zu nutzen, ist es notwendig, ein Mobiltelefon mit dem Fahrzeug zu koppeln. Dies erfolgt aktuell zumeist dadurch, dass ein initialer Verbindungsaufbau über einen Langdruck auf einem Multifunktionslenkrad gestartet wird. Alternativ wird der Verbindungsaufbau über ein Menü in einem zentralen Informationsdisplay gestartet.

Ferner ist in aktuellen Fahrzeugen oftmals eine Gestenerkennung implementiert. Dabei wird ein Raum über einer Mittelkonsole des Fahrzeuges durch eine TOF-Kamera (Time-of-Flight-Kamera) überwacht. Durch bestimmte Gesten in einem Sichtfeld der Kamera kann ein Anwender bestimmte Fahrzeugfunktionen aufrufen.

Bekannt ist z.B. aus der US 2014219508 A1 auch ein Verfahren zum Steuern einer Klappe eines Fahrzeugs, umfassend die folgenden Schritte: - Identifizieren eines in der Nähe der Klappe anwesenden Benutzers; - Erstellen wenigstens einer Bildaufnahme des Benutzers mittels einer Kamera; - Auswerten der aufgenommenen Bildaufnahme dahingehend, ob eine Öffnung der Klappe erforderlich ist; und - gegebenenfalls Öffnen der Klappe.

Die DE102014224583A1 offenbart ein Verfahren zur Bestimmung eines Zieles einer Person mittels einer Zielerkennungseinheit, wobei die Bestimmung auf einer Wahrscheinlichkeit beruht, mit der die Person das Ziel ansteuert, und wobei das Verfahren wenigstens die folgenden Schritte aufweist: Erkennen wenigstens eines durch die Person mitgeführten Gegenstandes und Bestimmen des wahrscheinlichen Zieles aus dem wenigstens einen erkannten Gegenstand.

Die aktuellen Möglichkeiten zum Konfigurieren von Fahrzeugfunktionen sind jedoch oftmals nicht intuitiv zu bedienen. So ist es beispielsweise notwendig, bestimmte Gesten zu kennen, um eine bestimmte Fahrzeugfunktion zu konfigurieren.

Es ist daher eine Aufgabe der Erfindung, eine intuitive Möglichkeit bereitzustellen, um Fahrzeugfunktionen zu konfigurieren.

Dies wird durch das erfindungsgemäße Verfahren und die erfindungsgemäße Vorrichtung zum Konfigurieren von Fahrzeugfunktionen erreicht.

Das erfindungsgemäße Verfahren zum Konfigurieren von Fahrzeugfunktionen umfasst ein Erfassen zumindest eines Kamerabildes mittels einer an einem Fahrzeug angeordneten Kamera, ein Auswerten des Kamerabildes, um einen in dem Kamerabild abgebildeten Gegenstand zu erkennen, und ein Konfigurieren einer Fahrzeugfunktion basierend auf dem in dem Kamerabild erkannten Gegenstand.

Die erfindungsgemäße Vorrichtung zum Konfigurieren von Fahrzeugfunktionen umfasst eine Erfassungseinheit, welche dazu eingerichtet ist, zumindest ein Kamerabild mittels einer an dem Fahrzeug angeordneten Kamera zu erfassen, eine Auswertungseinheit, welche dazu eingerichtet ist, das Kamerabild auszuwerten, um einen in dem Kamerabild abgebildeten Gegenstand zu erkennen, und eine Ansteuereinheit, welche dazu eingerichtet ist, eine Fahrzeugfunktion basierend auf dem in dem Kamerabild erkannten Gegenstand zu konfigurieren.

Eine Fahrzeugfunktion ist dabei jegliche Funktion, welche von dem Fahrzeug bereitgestellt wird. Dies sind insbesondere die Funktionen von Fahrassistenzsystemen und Komfortfunktionen des Fahrzeuges. Ein Konfigurieren ist dabei ein Setzen von bestimmten Betriebsparametern, um das Fahrzeugsystem für einen Anwender anzupassen. Die Konfiguration wird dabei bevorzugt auch dann beibehalten, wenn der Gegenstand wieder aus einem Sichtfeld der Kamera entfernt wird.

Es erfolgt ein Erfassen zumindest eines Kamerabildes mittels einer an dem Fahrzeug angeordneten Kamera. Das Kamerabild ist somit ein Bild, welches von der Kamera erfasst wurde. Das Kamerabild ist dabei insbesondere ein Bild eines von der Kamera bereitgestellten Videostreams. Es erfolgt ferner ein Auswerten des Kamerabildes oder mehrerer Kamerabilder, um einen in dem Kamerabild abgebildeten Gegenstand zu erkennen. Es wird somit eine Bildanalyse ausgeführt. Als Ergebnis der Bildanalyse wird ausgegeben, was für ein Gegenstand in dem Kamerabild abgebildet ist. Dabei kann bei dem Auswerten des Kamerabildes insbesondere bestimmt werden, ob ein bestimmter Typ oder eine bestimmte Klasse eines Gegenstandes in dem Kamerabild vorhanden ist, beispielsweise, ob ein Mobiltelefon in dem Kamerabild abgebildet ist. Alternativ oder zusätzlich kann bestimmt werden, ob ein spezieller Gegenstand, beispielsweise ein bestimmtes Mobiltelefon, in dem Kamerabild abgebildet ist. Basierend darauf, welcher Gegenstand in dem Kamerabild abgebildet ist, erfolgt das Konfigurieren einer Fahrzeugfunktion. Bevorzugt sind somit dabei bestimmte Gegenstände bestimmten Fahrzeugfunktionen zugeordnet. Anders formuliert können bestimme Fahrzeugfunktionen dadurch aufgerufen werden, dass bestimmte Gegenstände in ein Sichtfeld der Kamera bewegt werden. Erfindungsgemäß wird es somit u.a. ermöglicht, bestimmte Fahrzeugfunktionen zu konfigurieren, indem ein bestimmter Gegenstand in ein Sichtfeld der Kamera bewegt wird.

Die Kamera ist insbesondere eine Time-of-Flight-Kamera. Solche Kameras werden oftmals für eine Gestenerkennung im Innenraum eines Fahrzeuges genutzt. Eine solche Kamera lässt somit eine Mehrfachfunktion für die Kamera zu. Auch ist eine solche Kamera gerade bei ungünstigen Lichtbedingungen günstig, um Gegenstände zu erkennen.

Erfindungsgemäß wird somit eine besonders intuitive Konfiguration von Fahrzeugfunktionen ermöglicht. Das Konfigurieren der Fahrzeugfunktionen kann dabei sogar unbewusst durch einen Gegegstand ausgelöst werden, welcher in das Sichtfeld der Kamera bewegt wird.

Die Fahrzeugfunktion ist dazu eingerichtet, aktiv auf den Gegenstand einzuwirken. Optional wird die Fahrzeugfunktion von einem Infotainmentsystem bereitgestellt. Gerade hierbei handelt es sich um Fahrzeugfunktionen, die für einen Anwender oftmals schwierig zu konfigurieren sind, da oftmals eine Vielzahl von Optionen verfügbar ist. Gerade bei diesen Systemen ist es also vorteilhaft, wenn eine intuitive Konfigurationsmöglichkeit bereitgestellt wird. Unter einem aktiven einwirken auf den Gegenstand ist zu verstehen, dass die Fahrzeugfunktion insbesondere einen Aktor umfasst, der dazu vorgesehen ist, auf den Gegenstand einzuwirken.

Es ist vorteilhaft, wenn bei dem Auswerten des Kamerabildes erkannt wird, ob der Gegenstand ein Kommunikationsendgerät ist, und bei dem Konfigurieren der Fahrzeugfunktion ein Verbindungsaufbau zwischen dem Fahrzeug und dem Kommunikationsendgerät angesteuert wird, wenn der Gegenstand ein Kommunikationsendgerät ist. Dies ist vorteilhaft, da Kommunikationsendgeräte, insbesondere Mobiltelefone, bevorzugt im Bereich einer Mittelkonsole abgelegt werden, welche bei aktuellen Fahrzeugen oftmals durch eine Kamera einer Gestenerkennung erfasst wird. Der Gegenstand wird somit besonders günstig im Bereich eines Sichtfeldes der Kamera platziert und kann besonders gut erkannt werden. Das Koppeln des Mobiltelefons mit dem Fahrzeug ist dabei ein Konfigurieren eines Fahrzeugsystems, da dabei Betriebsparameter gesetzt werden, um das Fahrzeugsystem für einen Anwender, hier für dessen Mobiltelefon, anzupassen.

Auch ist es vorteilhaft, wenn bei dem Auswerten des Kamerabildes erkannt wird, ob der Gegenstand ein Getränkebehälter ist, und bei dem Konfigurieren der Fahrzeugfunktion eine Temperatur eines Getränkehalters eingestellt wird, wenn der Gegenstand ein Getränkebehälter ist. Dabei wird die einzustellende Temperatur insbesondere basierend auf dem erkannten Gegenstand gewählt. So wird beispielsweise eine niedrigere Temperatur für den Getränkehalter eingestellt, wenn eine Flasche erkannt wird als wenn ein Kaffeebecher erkannt wird.

Weiter vorteilhaft ist es, wenn bei dem Konfigurieren der Fahrzeugfunktion einem Navigationssystem ein Navigationsziel vorgegeben wird, wobei das Navigationsziel basierend auf dem erkannten Gegenstand gewählt wird. So können Gegenstände mit Fahrtzielen verknüpft werden und eine intuitive Konfiguration des Navigationssystems erfolgen.

Auch ist es vorteilhaft, wenn die Kamera einen Innenraum des Fahrzeuges erfasst. Gerade wenn ein Anwender sich im Inneren des Fahrzeuges befindet, möchte dieser typischerweise Fahrzeugfunktionen konfigurieren und somit für gemäß seinen Präferenzen anpassen. Dies wird dadurch ermöglicht, dass die Kamera den Innenraum des Fahrzeuges erfasst. Es wird somit ein komfortables Konfigurieren der Fahrzeugfunktionen ermöglicht. Alternativ ist es vorteilhaft, wenn die Kamera eine Umgebung des Fahrzeuges erfasst. So können bestimmte Fahrzeugoptionen bereits dann konfiguriert und somit für einen Anwender angepasst werden, wenn der Anwender sich dem Fahrzeug nähert. So können beispielsweise auch solche Gegenstände zum Auslösen von Fahrzeugfunktionen genutzt werden, welche nicht in einen Passagierraum des Fahrzeuges mitgenommen werden, sondern beispielsweise in einen Kofferraum des Fahrzeuges abgelegt werden. Bevorzugt ist die Kamera dabei eine Umfeldkamera des Fahrzeugs, beispielsweise die Kamera eines Parkhilfesystems. Weiter bevorzugt wird das Erfassen des zumindest einen Kamerabildes dabei durch ein Entriegeln des Fahrzeuges ausgelöst.

Auch ist es vorteilhaft, wenn bei dem Auswerten des Kamerabildes auf eine Datenbank zugegriffen wird, in welcher Daten hinterlegt sind, welche eine Klassifizierung des Gegenstandes ermöglichen. Eine solche Datenbank kann regelmäßig aktualisiert werden, wodurch beispielsweise neue Formen bestimmter Gegenstände bereitgestellt werden können.

Auch ist es vorteilhaft, wenn ferner ein Ausführen einer Anwendererkennung erfolgt, um einen dem Gegenstand zugehörigen Anwender zu erkennen, wobei das Konfigurieren der Fahrzeugfunktion basierend auf dem in dem Kamerabild erkannten Gegenstand und dem erkannten Anwender erfolgt. Bei einer Anwendererkennung werden bestimmte Personen wiedererkannt. Eine solche Anwendererkennung ist beispielsweise in einigen Fahrzeugen als sog. Fahrererkennung bereits implementiert. In diesem Falle kann die Anwendererkennung durch ein Fahrererkennungssystem erfolgen, welches die Fahrererkennung bereitstellt. Ob ein Gegenstand einem erkannten Anwender zugehörig ist, kann dabei auf unterschiedliche Weise bestimmt werden. So kann beispielsweise davon ausgegangen werden, dass ein Gegenstand immer einem Fahrer des Fahrzeuges zugehörig ist. Alternativ kann eine Auswertung des Kamerabildes dahingehend erfolgen, ob ein von der Anwendererkennung erkannter Anwender den Gegenstand bei sich trägt. So wird insbesondere aus körperlicher Nähe des Anwenders zu dem Gegenstand auf die Zugehörigkeit des Gegenstandes zu dem Anwender geschlossen. Der das Verfahren ausführenden Vorrichtung ist somit bekannt, welcher Anwender einen bestimmten Gegenstand in das Sichtfeld der Kamera bewegt hat. Einem bestimmten Gegenstand oder einer bestimmten Klasse von Gegenständen können somit unterschiedliche Konfigurationen von Fahrzeugfunktionen zugeordnet werden, abhängig davon, welchem Anwender der Gegenstand zugehörig ist.

Bevorzugt erfolgt die Anwendererkennung mittels einer Gesichtsidentifikation, welche insbesondere basierend auf dem erfassten Kamerabild erfolgt. Die Anwendererkennung kann somit berührungslos erfolgen. Erfolgt die Anwendererkennung basierend auf dem erfassten Kamerabild, so kann zugleich ein zugehöriger Gegenstand erkannt werden.

Auch ist es vorteilhaft, wenn bei dem Auswerten des Kamerabildes, um das in den Kamerabild abgebildeter Gegenstand zu erkennen, der Gegenstand basierend auf einer Datenbank, welche Informationen bezüglich möglicher Gegenstände umfasst, und dem erkannten Anwender erkannt wird. So kann beispielsweise in einem Fall, in dem ein in dem Kamerabild abgebildeter Gegenstand nicht zweifelsfrei erkannt werden kann, basierend darauf, welchem Anwender das Objekt zugehörig ist, eine Verifizierung oder eine genauere Identifizierung des abgebildeten Gegenstandes ausgeführt werden. So kann beispielsweise eine Anzahl möglicher Gegenstände, welche in dem Kamerabild abgebildet sein könnte, basierend darauf eingeschränkt werden, welche Gegenstände ein bestimmter Anwender zuvor schon bei sich geführt hat, und welche Gegenstände dem bestimmten Anwender also zuvor bereits als zugehörig zugeordnet wurden. Es wird somit eine besonders zuverlässige Erkennung von Gegenständen ermöglicht.

Weitere Einzelheiten, Merkmale und Vorteile der Erfindung ergeben sich aus der nachfolgenden Beschreibung und den Figuren. Es zeigen:
- Figur 1: ein Ablaufdiagramm des erfindungsgemäßen Verfahrens zum Konfigurieren von Fahrzeugfunktionen in einer beispielhaften Ausführungsform der Erfindung, und
- Figur 2: ein Fahrzeug mit einer Vorrichtung zum Konfigurieren von Fahrzeugfunktionen gemäß der beispielhaften Ausführungsform der Erfindung.

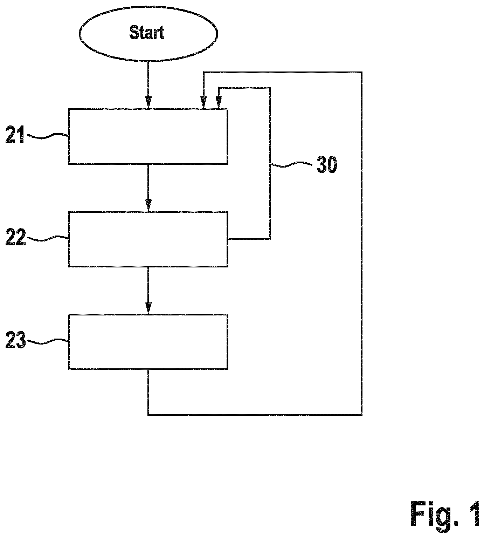

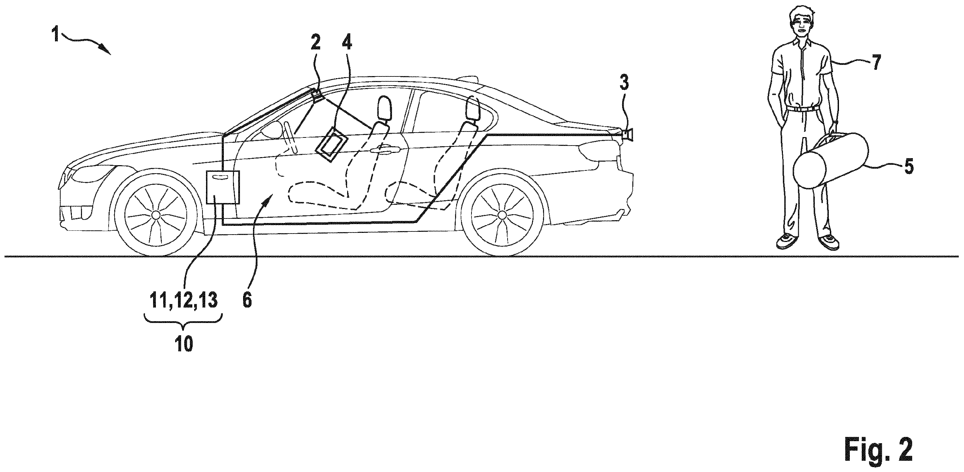

Figur 1 zeigt ein Ablaufdiagramm eines erfindungsgemäßen Verfahrens zum Konfigurieren von Fahrzeugfunktionen gemäß einer ersten Ausführungsform der Erfindung. Das Verfahren wird von einer Vorrichtung 10 zum Konfigurieren von Fahrzeugfunktionen ausgeführt. Ein entsprechendes Fahrzeug 1 mit der Vorrichtung 10 zum Konfigurieren von Fahrzeugfunktionen ist in Figur 2 dargestellt.

Das Verfahren wird gestartet, wenn das Fahrzeug 1 in Betrieb genommen wird, beispielsweise dann, wenn das Fahrzeug 1 mittels einer Fernbedienung entriegelt wird. Wird das Verfahren angestoßen, so wird zunächst ein erster Verfahrensschritt 21 ausgeführt. In dem ersten Verfahrensschritt 21 erfolgt ein Erfassen zumindest eines Kamerabildes mittels einer an dem Fahrzeug 1 angeordneten Kamera 2, 3.

So ist an dem in Figur 2 dargestellten Fahrzeug 1 beispielsweise eine erste Kamera 2 und eine zweite Kamera 3 angeordnet. Die erste Kamera 2 ist eine Time-of-Flight-Kamera, welche in einem Innenraum 6 des Fahrzeuges 1 angeordnet ist. Die erste Kamera 2 ist dazu im Bereich des Innenspiegels des Fahrzeuges 1 angeordnet und blickt auf eine Mittelkonsole des Fahrzeuges 1 herab. Die zweite Kamera 3 ist eine Rückfahrkamera des Fahrzeuges 1. Diese ist an einem Heck des Fahrzeuges 1 angeordnet und erfasst einen Bereich, welcher hinter dem Fahrzeug 1 liegt. In dieser beispielhaften Ausführungsform wird das Verfahren basierend auf den Bildern der beiden Kameras 2, 3 ausgeführt. In anderen beispielhaften Ausführungsformen kann wahlweise auf die erste Kamera 2 oder auf die zweite Kamera 3 verzichtet werden.

Zunächst wird das erfindungsgemäße Verfahren basierend auf den Kamerabildern der ersten Kamera 2 beschrieben. Durch die erste Kamera 2 werden kontinuierlich Kamerabilder erfasst. Die Kamerabilder der ersten Kamera 2 werden an eine Recheneinheit 10 übertragen, welche dazu eingerichtet ist, das erfindungsgemäße Verfahren auszuführen. Nachdem von der ersten Kamera 2 ein Kamerabild erfasst wurde und dieses an die Recheneinheit 10 übertragen wurde, wird ein zweiter Verfahrensschritt 22 ausgeführt.

In dem zweiten Verfahrensschritt 22 erfolgt ein Auswerten des Kamerabildes, um einen in dem Kamerabild abgebildeten Gegenstand 4, 5 zu erkennen. Dies erfolgt mittels einer Bildanalyse. Es wird dazu auf eine Datenbank zugegriffen, in welcher Daten hinterlegt sind, welche eine Typisierung oder Klassifizierung des Gegenstandes 4, 5 ermöglichen. So sind in Datenbank beispielsweise unterschiedliche Formen von Kommunikationsendgeräten, hier von Mobiltelefonen hinterlegt, um einen Gegenstand als Mobiltelefon zu klassifizieren, wenn dessen Form einer der unterschiedlichen Formen in der Datenbank entspricht, welche für Mobiltelefone hinterlegt sind. Wird eine der hinterlegten Formen in dem erfassten Kamerabild erkannt, so wird bei dem Auswerten des Kamerabildes erkannt, dass ein Mobiltelefon in dem Kamerabild abgebildet ist. Wird ein Gegenstand 4, 5 in dem von der ersten Kamera 2, 3 erfassten Kamerabild erkannt, so wird ein dritter Verfahrensschritt 23 ausgeführt. Wird in dem Kamerabild kein Gegenstand 4, 5 erkannt, beispielsweise, weil keine ähnlichen Formen in der Datenbank gespeichert sind, so verzweigt das Verfahren zurück auf den ersten Verfahrensschritt 21. Dies ist in Figur 1 durch den Pfeil 30 dargestellt.

In dem in Figur 2 dargestellten Beispiel befindet sich ein erster Gegenstand 4 in dem Sichtfeld der ersten Kamera 2. Der erste Gegenstand 4 ist ein Mobiltelefon. Es wird somit bei dem Auswerten des Kamerabildes der ersten Kamera 2 in dem zweiten Verfahrensschritt 22 erkannt, dass sich ein Mobiltelefon in dem Sichtfeld der ersten Kamera 2 befindet. Es wird somit ein Gegenstand erkannt.

In dem dritten Verfahrensschritt 23 erfolgt ein Konfigurieren einer Fahrzeugfunktion basierend auf dem in dem Kamerabild erkannten Gegenstand 4, 5. Dazu ist in der Recheneinheit 10 eine Verknüpfungstabelle hinterlegt, in welcher jeder Klasse eines Gegenstands, also jeder Gegenstandsklasse, eine Konfiguration einer Fahrzeugfunktion zugeordnet ist. So ist beispielsweise der Gegenstandsklasse "Mobiltelefon" eine Konfiguration einer Fahrzeugfunktion zugeordnet, welche ein Konfigurieren einer Freisprecheinrichtung für ein Mobiltelefon ermöglicht, um das Mobiltelefon mit einem Infotainmentsystem des Fahrzeuges 1 zu verbinden. Dabei können bei dem Konfigurieren der Freisprecheinrichtung auch weitere Informationen von einem Anwender abgefragt werden. Das Konfigurieren der Freisprecheinrichtung des Fahrzeuges 1 für ein Mobiltelefon wird im Folgenden als Koppeln bezeichnet. Das Koppeln wird immer dann ausgeführt, wenn sich ein Mobilfunktelefon in dem Sichtfeld der ersten Kamera 2 befindet oder in dieses Sichtfeld bewegt wird. Wird das Koppeln aufgerufen, so erfolgt ein Verbindungsaufbau zwischen dem Fahrzeug 1 und dem Mobiltelefon. Optional kann dabei eine Bestätigung des Anwenders 7 angefordert werden, bevor der Verbindungsaufbau ausgeführt wird. Ist der dritte Verfahrensschritt 23 abgeschlossen, so verzweigt das Verfahren zurück auf den ersten Verfahrensschritt 21 und es können weitere Kamerabilder erfasst werden und entsprechend ausgewertet werden.

Dadurch, dass das Koppeln immer dann ausgeführt wird, wenn ein Mobilfunktelefon in das Sichtfeld der ersten Kamera 2 bewegt wird, ist es einem Anwender 7 möglich, das Koppeln auszulösen, indem dieser bewusst oder unbewusst sein Mobilfunktelefon in das Sichtfeld der ersten Kamera 2 bewegt.

Das Koppeln ist nur als ein Beispiel für ein Konfigurieren einer Fahrzeugfunktion zu sehen, welche mittels des erfindungsgemäßen Verfahrens angesteuert werden kann. Es können jedoch auch andere Fahrzeugfunktionen erfindungsgemäß angesteuert werden. Ein weiteres Beispiel sei mit Hinblick auf die zweite Kamera 3 im Folgenden beschrieben. Die zweite Kamera 3 ist eine Rückfahrkamera des Fahrzeuges 1. Nähert sich ein Anwender 7, typischerweise ein Fahrer des Fahrzeuges 1, dem Fahrzeug 1, so wird dieser das Fahrzeug 1 entriegeln. Dadurch wird das erfindungsgemäße Verfahren gestartet und in dem ersten Verfahrensschritt 21 wird mittels der zweiten Kamera 3 ein Kamerabild erfasst. Befindet sich der Anwender 7 in dem Sichtfeld der zweiten Kamera 3, so kann durch die zweite Kamera 3 ebenfalls erfasst werden, welche Gegenstände 4, 5 der Anwender 7 bei sich trägt. Es sei beispielhaft angenommen, dass der Anwender 7 ein zweiter Gegenstand 5, hier eine Sporttasche, bei sich trägt. Der Anwender 7 wird somit zusammen mit dem zweiten Gegenstand 5 in einem Kamerabild erfasst, welches an die Recheneinheit 10 übertragen wird.

Bei dem Auswerten des durch die zweite Kamera 3 erfassten Kamerabildes in dem zweiten Verfahrensschritt 22 wird daher erkannt, dass der Anwender 7 einen Gegenstand 4, 5 bei sich trägt, welches in die Gegenstandsklasse "Sporttasche" fällt. Der Gegenstandsklasse "Sporttasche" ist in der Verknüpfungstabelle eine Konfiguration einer Fahrzeugfunktion zugeordnet, durch welche in einen Navigationssystem eine Navigationsroute zu einem Fitnessstudio aufgerufen wird. Es wird daher in dem dritten Verfahrensschritt 23 automatisch ein Navigationssystem des Fahrzeuges entsprechend konfiguriert, um den Anwender 7 zu dem Fitnessstudio zu führen.

In vorteilhaften Ausführungsformen der Erfindung ist das zuvor beschriebene Verfahren mit einer Anwendererkennung gekoppelt. Dazu wird beispielsweise zwischen dem ersten Verfahrensschritt 21 und dem zweiten Verfahrensschritt 22 eine Anwendererkennung ausgeführt. Im Falle der ersten Kamera 2 folgt die Anwendererkennung bevorzugt mittels einer weiteren Kamera, die von einem Gesichtserkennungssystem umfasst ist. Dies ist daher vorteilhaft, da es die Anordnung der ersten Kamera 2 nicht erlaubt, ein Gesicht des Anwenders 7 zu erfassen, wenn dieser sich in dem Innenraum 6 des Fahrzeuges 1 befindet. Im Falle der zweiten Kamera 3 kann die Anwendererkennung basierend auf den Kamerabildern erfolgen, welche von der zweiten Kamera 3 in dem ersten Verfahrensschritt 21 erfasst wurden. So kann mittels der Anwendererkennung beispielsweise erkannt werden, ob ein Anwender A oder ein Anwender B sich auf einem Fahrersitz des Fahrzeuges 1 befindet oder sich von hinten an das Fahrzeug 1 annähert. Die Anwendererkennung erfolgt in beiden Fällen somit mittels einer Gesichtsidentifikation, welche im Falle der zweiten Kamera 3 basierend auf dem erfassten Kamerabild erfolgt.

Erfolgt eine Anwendererkennung, so erfolgt das Konfigurieren der Fahrzeugfunktion in dem dritten Verfahrensschritt 23 basierend auf dem in dem Kamerabild erkannten Gegenstand 4, 5 und dem erkannten Anwender 7. Dabei wird ein Anwender 7 als einem Gegenstand 4, 5 zugehörig betrachtet, wenn dieser sich in dem von der zweiten Kamera 3 erfassten Kamerabild in Kontakt mit dem zweiten Gegenstand 5 befindet, dieses beispielsweise trägt. Im Falle der ersten Kamera 2 wird ein Gegenstand, welcher sich von einer Fahrerseite aus in das Sichtfeld der ersten Kamera 2 bewegt, als einem Fahrer zugehörig betrachtet, also der Person, welche durch die Anwendererkennung identifiziert wurde. Bei dem Konfigurieren der Fahrzeugfunktion in dem dritten Verfahrensschritt 23 können nun für jeden möglichen Anwender 7 besondere Fahrzeugfunktionen bzw. zugehörige Konfigurationen hinterlegt sein. Wird beispielsweise erkannt, dass der einem Gegenstand 4, 5 zugehörige Anwender 7 ein regelmäßiger Nutzer des Fahrzeuges 1 ist, so kann das Koppeln zwischen Fahrzeug 1 und Mobiltelefon beispielsweise ohne eine Rückfrage ausgeführt werden, wenn dieser Anwender 7 sein Mobiltelefon in das Sichtfeld der ersten Kamera 2 bewegt. Ist der Anwender 7 jedoch unbekannt, so erfolgt eine Rückfrage, ob das Mobilfunktelefon mit dem Fahrzeug 1 verbunden werden soll.

In einem weiteren Beispiel wird erkannt, dass der mittels einer der Kameras 2, 3 erfasste Gegenstand ein Getränkebehälter ist. So kann der in Figur 2 gezeigte erste Gegenstand 4 alternativ ein Getränkebehälter sein. Insbesondere wird auch erkannt, um was für eine Art von Getränkebehälter es sich handelt. Dies kann beispielsweise mittels zweier Gegenstandsklassen für unterschiedliche Arten von Getränkebehältern erfolgen. So wird beispielsweise erkannt, ob es sich um einen Kaffeebecher, eine Dose oder eine Flasche handelt. Abhängig davon, welche Art von Getränkebehälter erkannt wurde wird eine Temperaturfunktion eines Getränkehalters angepasst, also diese Fahrzeugfunktion konfiguriert. So wird der Getränkehalter beispielsweise beheizt, wenn der erkannte Getränkebehälter ein Kaffeebecher ist und wird gekühlt, wenn der Getränkebehälter eine Dose oder eine Flasche ist. Der Getränkehalter stellt mit seiner Temperaturfunktion somit eine Fahrzeugfunktion bereit, die dazu eingerichtet ist, aktiv auf den Gegenstand 4; 5, hier den Getränkebehälter, einzuwirken.

In einem anderen Beispiel könnte z.B. erkannt werden, dass eine bestimmte Person sich mit der Sporttasche dem Fahrzeug 1 nähert und die Navigationsanweisung könnte basierend auf dem erkannten Anwender 7 zu einem bestimmten Fitnessstudio ausgewählt werden. So könnte das Navigationssystem beispielsweise so konfiguriert werden, dass dieses den Anwender A zu einem ersten Fitnessstudio leitet und den Anwender B zu einem zweiten Fitnessstudio leitet, abhängig davon welcher der Anwender als der Sporttasche zugehörig betrachtet wird. Somit wird bei dem Konfigurieren der Fahrzeugfunktion einem Navigationssystem ein Navigationsziel vorgegeben, wobei das Navigationsziel basierend auf dem erkannten Gegenstand 4, 5 gewählt wird.

Es ergibt sich eine Vielzahl von Möglichkeiten, in welcher Weise die Information von Gegenstand 4, 5 und Anwender 7 auf eine bestimmte Fahrzeugfunktion zur Konfiguration abgebildet werden kann. So kann beispielsweise eine Navigationsanweisung zu einem Arbeitsort eines Anwenders 7 aufgerufen werden, wenn dieser sich in einem Anzug dem Fahrzeug 1 nähert oder eine Aktentasche trägt. Alternativ oder zusätzlich kann das Navigationsziel vorgegeben werden, indem ein Gegenstand 4, 5 in ein Sichtfeld der ersten Kamera 2 gehalten wird.

Optional wird bei dem Auswerten des Kamerabildes, um den in dem Kamerabild abgebildeten Gegenstand 4, 5 zu erkennen, den Gegenstand 4, 5 basierend auf einer Datenbank für Gegenstände und dem erkannten Anwender erkannt. Es wird somit das Erkennen des Gegenstandes 4, 5 bei dem Auswerten des Kamerabildes mittels der Informationen gestützt, welche durch die Anwendererkennung bereitgestellt werden. So erfolgt insbesondere ein Filtern der Datenbank basierend auf dem erkannten Anwender 7. Dabei werden, beispielsweise bestimmte Gegenstandsklassen ausgeschlossen, welche nicht typisch für den Anwender 7 sind und diesen daher nicht zugeordnet sind. So könnte beispielsweise eine Gegenstandsklasse "Handtasche" ausgeschlossen werden, wenn bei der Anwendererkennung erkannt wird, dass sich eine männliche Person dem Fahrzeug 1 nähert.

Die Vorrichtung zum Konfigurieren von Fahrzeugfunktionen wird in den zuvor beschriebenen Ausführungsformen durch eine Recheneinheit 10 gebildet. Diese umfasst eine Erfassungseinheit, welche dazu eingerichtet ist, zumindest ein Kamerabild mittels der an dem Fahrzeug 1 angeordneten Kamera 2, 3 zu erfassen. Die Erfassungseinheit 11 ist in dieser Ausführungsform eine an der Recheneinheit 10 angeordnete Videoschnittstelle. Die Recheneinheit 10 umfasst ferner eine Auswertungseinheit 12, welche dazu eingerichtet ist, das Kamerabild auszuwerten, um einen in dem Kamerabild abgebildetes Gegenstand 4, 5 zu erkennen. Die Auswertungseinheit 12 ist ein Prozessor und ein Speicher, durch welche eine Bildverarbeitung ausgeführt wird. Die Recheneinheit 10 umfasst ferner eine Ansteuereinheit 13, welche dazu eingerichtet ist, eine Fahrzeugfunktion basierend auf dem in dem Kamerabild erkannten Gegenstand 4, 5 zu konfigurieren. Die Ansteuereinheit 13 ist eine Schnittstelle, über welche eine Kommunikation mit den übrigen Systemen des Fahrzeugs 1 ermöglicht wird. Durch diese werden entsprechende Daten zur Konfiguration der Fahrzeugsysteme ausgegeben.

Erfindungsgemäß kann somit beispielsweise mittels einer Gestikkamera ein Gegenstand, wie z.B. ein Mobiltelefon, erkannt werden, und bei erfolgreicher Erkennung ein Verbindungsdialog in einer Mensch-Maschine-Schnittstelle angezeigt werden. Der Dialog kann in Bild und/oder Textform dargestellt werden und/oder mittels einer sprachlichen Ausgabe erfolgen. So kann beispielsweise eine akustische Frage erfolgen, welche besagt "möchten Sie dieses Telefon verbinden". In diesem Falle müsste ein Anwender 7 schlicht "JA" antworten, und den weiteren Anleitungen zur Verbindung folgen.

In Verbindung mit der Fahrererkennung kann verhindert werden, dass der Dialog unnötig doppelt auftritt. Die Kamera kann auch unterscheiden, ob ein Beifahrer oder ein Fahrer ein Telefon in den Erkennerraum der Gestikkamera hält. Optional können auch Telefone spezifisch erkannt werden und von anderen noch nicht mit dem Fahrzeug verbundenen Telefonen unterschieden werden.

Nebst oben stehender Offenbarung wird explizit auf die Offenbarung der Figuren 1 und 2 verwiesen.

### Bezugszeichenliste:

- 1: Fahrzeug
- 2: erste Kamera
- 3: zweite Kamera
- 4: erster Gegenstand
- 5: zweiter Gegenstand
- 6: Innenraum
- 7: Anwender

- 10: Vorrichtung
- 11: Erfassungseinheit
- 12: Auswertungseinheit
- 13: Ansteuereinheit

- 21: erster Verfahrensschritt
- 22: zweiter Verfahrensschritt
- 23: dritter Verfahrensschritt
- 24: vierter Verfahrensschritt
- 30: Pfeil

## Patentansprüche

1. Verfahren zum Konfigurieren von Fahrzeugfunktionen, umfassend:
• ein Erfassen zumindest eines Kamerabildes mittels einer an einem Fahrzeug (1) angeordneten Kamera (2; 3),
• ein Auswerten des Kamerabildes, um einen in dem Kamerabild abgebildeten Gegenstand (4; 5) zu erkennen, und
• ein Konfigurieren einer Fahrzeugfunktion basierend auf dem in dem Kamerabild erkannten Gegenstand (4; 5),
• **gekennzeichnet dadurch,**
**dass** die Fahrzeugfunktion eine solche Fahrzeugfunktion ist, die dazu eingerichtet ist, aktiv auf den Gegenstand (4; 5) einzuwirken.

2. Verfahren gemäß Anspruch 1, **dadurch gekennzeichnet, dass** bei dem Auswerten des Kamerabildes erkannt wird, ob der Gegenstand (4; 5) ein Kommunikationsendgerät ist, und bei dem Konfigurieren der Fahrzeugfunktion ein Verbindungsaufbau zwischen dem Fahrzeug (1) und dem Kommunikationsendgerät angesteuert wird, wenn der Gegenstand (4; 5) ein Kommunikationsendgerät ist.

3. Verfahren gemäß einem der voranstehenden Ansprüche, **dadurch gekennzeichnet, dass** bei dem Auswerten des Kamerabildes erkannt wird, ob der Gegenstand (4; 5) ein Getränkebehälter ist, und bei dem Konfigurieren der Fahrzeugfunktion eine Temperatur eines Getränkehalters eingestellt wird, wenn der Gegenstand (4; 5) ein Getränkebehälter ist.

4. Verfahren gemäß einem der voranstehenden Ansprüche, **dadurch gekennzeichnet, dass** bei dem Konfigurieren der Fahrzeugfunktion einem Navigationssystem ein Navigationsziel vorgegeben wird, wobei das Navigationsziel basierend auf dem erkannten Gegenstand (4, 5) gewählt wird.

5. Verfahren gemäß einem der voranstehenden Ansprüche, **dadurch gekennzeichnet, dass** die Kamera (2) einen Innenraum (6) des Fahrzeuges (1) erfasst.

6. Verfahren gemäß einem der voranstehenden Ansprüche, **dadurch gekennzeichnet, dass** bei dem Auswerten des Kamerabildes auf eine Datenbank zugegriffen wird, in welcher Daten hinterlegt sind, welche eine Klassifizierung des Gegenstandes (4; 5) ermöglichen.

7. Verfahren gemäß einem der voranstehenden Ansprüche, ferner umfassend ein Ausführen einer Anwendererkennung, um einen dem Gegenstand (4; 5) zugehörigen Anwender (7) zu erkennen, wobei das Konfigurieren der Fahrzeugfunktion basierend auf dem in dem Kamerabild erkannten Gegenstand (4; 5) und dem erkannten Anwender (7) erfolgt, wobei die Anwendererkennung insbesondere mittels einer Gesichtsidentifikation erfolgt, welche insbesondere basierend auf dem erfassten Kamerabild erfolgt.

8. Verfahren gemäß Anspruch 8, **dadurch gekennzeichnet, dass** bei dem Auswerten des Kamerabildes, um das in den Kamerabild abgebildeter Gegenstand (4; 5) zu erkennen, der Gegenstand (4; 5) basierend auf einer Datenbank, welche Informationen bezüglich möglicher Gegenstände umfasst, und dem erkannten Anwender erkannt wird.

9. Vorrichtung (10) zum Konfigurieren von Fahrzeugfunktionen, umfassend:
• eine Erfassungseinheit, welche dazu eingerichtet ist, zumindest ein Kamerabild mittels einer an einem Fahrzeug (1) angeordneten Kamera (2; 3) zu erfassen,
• eine Auswertungseinheit, welche dazu eingerichtet ist, das Kamerabild auszuwerten, um einen in dem Kamerabild abgebildeten Gegenstand (4; 5) zu erkennen, und
• ein Ansteuereinheit, welche dazu eingerichtet ist, eine Fahrzeugfunktion basierend auf dem in dem Kamerabild erkannten Gegenstand (4, 5) zu konfigurieren,
**dadurch gekennzeichnet,**
**dass** die Fahrzeugfunktion eine solche Fahrzeugfunktion ist, die dazu eingerichtet ist, aktiv auf den Gegenstand (4; 5) einzuwirken.

## Claims

1. Method for configuring vehicle functions, comprising:
• recording at least one camera image by way of a camera (2; 3) arranged on a vehicle (1),
• evaluating the camera image in order to identify an object (4; 5) depicted in the camera image, and
• configuring a vehicle function based on the object (4; 5) identified in the camera image,
• **characterized in that** the vehicle function is a vehicle function that is designed to have an active effect on the object (4; 5).

2. Method according to Claim 1, **characterized in that**, when evaluating the camera image, it is identified whether the object (4; 5) is a communication terminal and, when configuring the vehicle function, a connection setup between the vehicle (1) and the communication terminal is activated when the object (4; 5) is a communication terminal.

3. Method according to either of the preceding claims, **characterized in that**, when evaluating the camera image, it is identified whether the object (4; 5) is a drinks holder and, when configuring the vehicle function, a temperature of a drinks holder is set when the object (4; 5) is a drinks holder.

4. Method according to one of the preceding claims, **characterized in that**, when configuring the vehicle function, a navigation destination is specified to a navigation system, wherein the navigation destination is selected based on the identified object (4; 5).

5. Method according to one of the preceding claims, **characterized in that** the camera (2) records a passenger compartment (6) of the vehicle (1).

6. Method according to one of the preceding claims, **characterized in that**, when evaluating the camera image, a database storing data enabling the object (4; 5) to be classified is accessed.

7. Method according to one of the preceding claims, furthermore comprising carrying out user identification in order to identify a user (7) associated with the object (4; 5), wherein the vehicle function is configured based on the object (4; 5) identified in the camera image and on the identified user (7), wherein the user is identified in particular by way of facial identification, which is performed in particular based on the recorded camera image.

8. Method according to Claim 8, **characterized in that**, when evaluating the camera image in order to identify the object (4; 5) depicted in the camera image, the object (4; 5) is identified based on a database that comprises information about possible objects and on the identified user.

9. Device (10) for configuring vehicle functions, comprising:
• a recording unit that is designed to record at least one camera image by way of a camera (2; 3) arranged on a vehicle (1),
• an evaluation unit that is designed to evaluate the camera image in order to identify an object (4; 5) depicted in the camera image, and
• an activation unit that is designed to configure a vehicle function based on the object (4; 5) identified in the camera image,
**characterized in that** the vehicle function is a vehicle function that is designed to have an active effect on the object (4; 5).

## Revendications

1. Procédé permettant de configurer des fonctions de véhicule, comprenant :
• une détection d'au moins une image de caméra au moyen d'une caméra (2 ; 3) disposée sur un véhicule (1),
• une évaluation de l'image de caméra pour identifier un objet (4 ; 5) représenté sur l'image de caméra, et
• une configuration d'une fonction de véhicule sur la base de l'objet (4 ; 5) identifié sur l'image de caméra,
• **caractérisé en ce que** la fonction de véhicule est une fonction de véhicule qui est conçue pour agir activement sur l'objet (4 ; 5).

2. Procédé selon la revendication 1, **caractérisé en ce que** lors de l'évaluation de l'image de caméra, on identifie si l'objet (4 ; 5) est un terminal de communication, et lors de la configuration de la fonction de caméra, un établissement de liaison entre le véhicule (1) et le terminal de communication est piloté si l'objet (4 ; 5) est un terminal de communication.

3. Procédé selon l'une quelconque des revendications précédentes, **caractérisé en ce que** lors de l'évaluation de l'image de caméra, on identifie si l'objet (4 ; 5) est un récipient pour boisson, et lors de la configuration de la fonction de véhicule, une température du récipient pour boisson est réglée si l'objet (4 ; 5) est un récipient pour boisson.

4. Procédé selon l'une quelconque des revendications précédentes, **caractérisé en ce que** lors de la configuration de la fonction de véhicule, une destination de navigation est spécifiée pour un système de navigation, la destination de navigation étant choisie en fonction de l'objet (4, 5) identifié.

5. Procédé selon l'une quelconque des revendications précédentes, **caractérisé en ce que** la caméra (2) détecte un habitacle (6) du véhicule (1).

6. Procédé selon l'une quelconque des revendications précédentes, **caractérisé en ce que** lors de l'évaluation de l'image de caméra, une base de données est consultée dans laquelle sont mémorisées des données qui permettent une classification de l'objet (4 ; 5).

7. Procédé selon l'une quelconque des revendications précédentes, comprenant en outre une exécution d'une identification d'utilisateur afin d'identifier un utilisateur (7) associé à l'objet (4 ; 5), dans lequel la configuration de la fonction de véhicule est effectuée sur la base de l'objet (4 ; 5) identifié sur l'image de caméra et de l'utilisateur identifié (7), dans lequel l'identification d'utilisateur est effectuée en particulier au moyen d'une identification faciale qui est effectuée en particulier sur la base de l'image de caméra détectée.

8. Procédé selon la revendication 8, **caractérisé en ce que** lors de l'évaluation de l'image de caméra afin d'identifier l'objet (4 ; 5) représenté sur l'image de caméra, l'objet (4 ; 5) est identifié sur la base d'une base de données qui comprend des informations concernant des objets possibles et de l'utilisateur identifié.

9. Dispositif (10) permettant de configurer des fonctions de véhicule, comprenant :
• une unité de détection qui est conçue pour détecter au moins une image de caméra au moyen d'une caméra (2 ; 3) disposée sur un véhicule (1),
• une unité d'évaluation qui est conçue pour évaluer l'image de caméra afin d'identifier un objet (4 ; 5) représenté sur l'image de caméra, et
• une unité de pilotage qui est conçue pour configurer une fonction de véhicule sur la base de l'objet (4 ; 5) identifié sur l'image de caméra,
**caractérisé en ce que** la fonction de véhicule est une fonction de véhicule qui est conçue pour agir activement sur l'objet (4 ; 5).
